# EUROPEAN PATENT APPLICATION

(11) **EP 4 407 504 A1**
(43) Date of publication of application: **31.07.2024**
(21) Application number: 24152063.4
(22) Date of filing: 16.01.2024
(51) Int. Cl.: G06F 30/13, G06Q 10/06, G06Q 50/08

(54) **BUILDING PLANNING SYSTEM AND METHOD**

(30) Priority: 25.01.2023 US 202363440938 P
(71) Applicant: Qbiqai Ltd, 6492102 Tel Aviv (IL)
(72) Inventor: Gilboa, Elad, 6492102 Tel Aviv (IL); Kaminer, Elad, 6492102 Tel Aviv (IL); Solnik, Leeor, 6492102 Tel Aviv (IL)
(74) Representative: Caldon, Giuliano

(57) **Abstract**

An architectural computing system which generates multiple possible architectural building plans and, more particularly, but not exclusively, which incorporates multiple building factors to provide a detailed cost benefit analysis for each.

## Description

### RELATED APPLICATIONS

This application claims the benefit of priority under 35 USC §119(e) of U.S. Provisional Patent Application No. 63/440,938 filed 25 Jan. 2023, the contents of which are incorporated herein by reference in their entirety.

### FIELD AND BACKGROUND OF THE INVENTION

The present invention, in some embodiments thereof, relates to computing program which generates multiple possible architectural building plans and, more particularly, but not exclusively, which incorporates multiple building factors and/or analyses costs and/or benefits for each architectural building plan.

United States Patent Publication No. 2023/0008905 appears to disclose an approach that "automatically generates an optimized building structure design given a set of building design parameters including a specified interior layout. The generated building structure design determines floor plate sizing, beam sizing, column sizing, any needed lateral system, and connectors between the determined building element, which are then displayed to the building structure designer for review and which facilitates customization as desired by the building structure designer. Some or all of this process can then be repeated when building design parameters are changed thereby facilitating automated and iterative building structure design as differing design parameters and resulting optimized building structure designs are considered."

United States Patent Publication No. 2022/0198083 appears to disclose " a grid-based design application automatically generates a design for a structural system of a building. In operation, the grid-based design application generates a structural grid based on a region within a computer-aided design of the building. Subsequently, the grid-based design application applies the structural grid to the region to generate a gridded region. The grid-based design application computes a set of spanning directions based on the gridded region. The grid-based design application then generates at least a portion of the design for the structural system based on the set of spanning directions and the gridded region."

Korean Patent Application No. KR20140092431 appears to disclose " a vertical zoning method of a high-rise building planning step and a device thereof. The vertical zoning method of a high-rise building planning step, for a computer terminal device, includes the steps of: receiving basic information about an initial step of high-rise building planning, determining the number of the entire vertical zoning according to a combination type of an elevator based on the received basic information, and determining optimal vertical zoning according to the number of the entire vertical zoning."

The design of a building and/or architecture influences the construction costs and the usable area of the building which both affect the profitability and worthwhileness of the project. Value prediction of a building form and core structure can enhance building decisions and/or may reduce future uncertainties by marginalizing possible customers' needs and preferences.

Additional, art relating to architectural design is United States Patent Publication No. 2005/0114095, United States Patent Publication No. 2016/0040443, United States Patent Publication No. 2021/0150091, International Patent Publication No. 2005/114495, United States Patent Publication No. 2022/0083703.

### SUMMARY OF THE INVENTION

According to an aspect of some embodiments of the invention, there is provided a method for building planning including: inputting data on intended use and building constraints; generating multiple options for a main structure compliant to the building constraints; and outputting multiple building designs for each of the multiple options for a main structure each of the multiple building designs fitting for the intended use.

According to some embodiments of the invention, the generating includes generating multiple options for a building core.

According to some embodiments of the invention, the generating includes generating at least one of multiple options of a framework of the building and multiple options for a substructure of a building.

According to some embodiments of the invention, each of the multiple building designs includes a floor plan.

According to some embodiments of the invention, each of the multiple building designs includes an anticipated rent revenue.

According to some embodiments of the invention, each of the multiple options for a main structure includes at least one of a core type, a core construction method, a structural geometry and a geometry of a structural element.

According to some embodiments of the invention, the method further includes: outputting a cost benefit evaluation for example of at least one of the multiple building designs.

According to some embodiments of the invention, the inputting include accessing data from online databases to an algorithm.

According to some embodiments of the invention, plans are made for different intended uses and compared for achieving a goal.

According to some embodiments of the invention, the goal includes increasing revenue from the building.

According to some embodiments of the invention, the building design includes at least one long term cost.

According to some embodiments of the invention, the long term cost includes at least one of management costs, upkeep costs and cost of renovation.

According to some embodiments of the invention, the building constraints include at least one commercial data selected from a cost of materials, a cost of power, a cost of construction and a cost of manpower.

According to an aspect of some embodiments of the invention, there is provided an architectural computing system including: a database including data on building constraints and data on profitability of building management; and a processor programmed for generating multiple building core options and for each building core option generating multiple building plans incorporating multiple building constraints to provide a cost benefit analysis for each of the multiple building plans.

According to some embodiments of the invention, at least one of the building constraints is sourced from online database.

According to some embodiments of the invention, the building constraints include at least one of geographical factors, statutory laws and regulations, mapping data, commercial data and architectural data, preferences of a user of a building.

According to some embodiments of the invention, the processor is further configured for outputting an anticipated floor use.

According to some embodiments of the invention, the processor is further configured for outputting an anticipated rent revenue.

According to some embodiments of the invention, the processor is further configured for outputting a structural design including at least one of a core type, a core construction method, a structural geometry and a geometry of a structural element.

According to some embodiments of the invention, the system where the core options includes at least two of, a central core, a cast on site core, a prefabricated core, a service core, a decentralized core and a steel frame core.

### BREIF DESCRIPTION OF THE DRAWINGS

Some embodiments of the invention are herein described, by way of example only, with reference to the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.
Fig. 1: Flow diagram of a system, in accordance with an embodiment of the current invention.
Fig. 2: Flow chart illustrating a method of optimizing profitability of a building according to an embodiment of the invention.
Fig. 3: Block diagram of a system, in accordance with an embodiment of the current invention.
Fig. 4: A schematic illustration of the system in accordance with some embodiments.
Fig. 5 is a block diagram illustrating a system for designing a building in accordance with an embodiment of the current invention.
Fig. 6 is a flow chart illustration of a computer assisted method of designing building in accordance with an embodiment of the current invention.

### DESCRIPTION OF SPECIFIC EMBODIMENTS OF THE INVENTION

The present invention, in some embodiments thereof, relates to computing program which generates multiple possible architectural building plans and, more particularly, but not exclusively, which incorporates multiple building factors to provide a detailed cost benefit analysis for each.

### OVERVIEW

An aspect of some embodiments of the current invention relates to a computing program and/or software program which generates architectural building plans. Optionally, the system analyzes multiple possible frameworks for the building and/or core structure with multiple possible floor plans.

According to some embodiments, the program may incorporate various constraints and/or their interrelations (e.g., local building laws and/or surrounding architecture and/or purpose and/or needs and/or uses of space in the building and/or supply costs and/or other factors). According to some embodiments, the program may develop a singular and/or multiple potential building plans based, at least in part, on the various factors (e.g., goals, constraints, and/or their interrelations).

Some embodiments of the program may include algorithms to improve value prediction and/or efficiency of a building design by producing a high volume of potential layout plans using organizational program data. According to some embodiments, the program may include algorithms to improve and/or predict costs and/or profits for each possible building design. Optionally, the algorithms may improve and/or predict short term costs and/or profits for each possible building design. Optionally, the algorithms may improve and/or predict medium term costs and/or profits for each possible building design. Optionally, the algorithms may improve and/or predict long term costs and/or profits for each possible building design. Optionally, the algorithms may improve and/or predict short and/or medium term and/or long term costs and/or profits for each possible building design. Optionally, the algorithms may improve and/or predict long-term and/or short-term profits based on future building steps and/or developments and/or foreseeable problems.

According to some embodiments, the program may generate multiple possible building plans prior to construction. Some embodiments of the program may generate building plans from the initial stages in the building process. For example, planning the foundation and/or framework and/or the core and/or the shell of a building. Additionally, or alternatively, the program may generate plans for further stages in the building. For example, dividing the floor plan according to changing needs, updated legislation, environmental impact reports, etc. Additionally, or alternatively, the program may generate plans for renovation plans of the building and/or part thereof. For example, dividing the space on each floor and/or the decoration plan. The program may assist a user in developing an architectural

According to some embodiments, multiple plans and forms for the building may optionally be planned and/or compared and/or presented to the user. Optionally, the multiple plans and forms for the building may include costs and revenue over time, potential problems, etc.

### SPECIFIC EMBODIMENTS

Before explaining at least one embodiment of the invention in detail, it is to be understood that the invention is not necessarily limited in its application to the details of construction and the arrangement of the components and/or methods set forth in the following description and/or illustrated in the drawings and/or the Examples. The invention is capable of other embodiments or of being practiced or carried out in various ways.

Reference is now made to the figures.

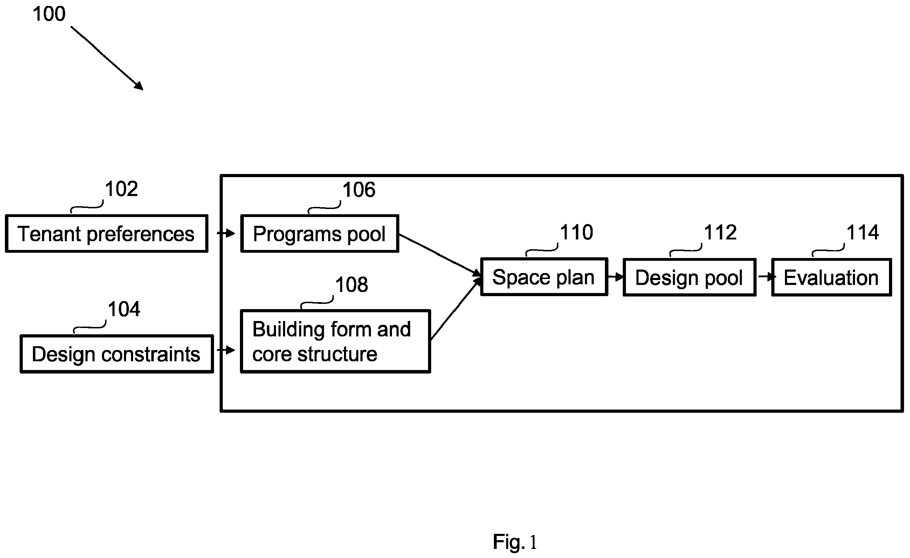

Fig. **1** is a flow chart illustrating a method of an embodiment of the current invention. For example, in method 100, various tenant preferences 102 and/or desired uses and/or needs are incorporated into the program. Additionally, or alternatively, building design constraints 104 are incorporated into the program. The tenant preferences 102 and/or building design constraints 104 may be pre-programmed into the program (and then selected by the user) and/or may be manually inputted by the user. Optionally, data on stylistic preferences, statutory requirements, utilities, location, desired profitability, etc. may be input to a programs pool 106. Optionally, a preselected building form and/or core structure 108 may be input to the program. Optionally, the program may design one or more building forms and/or core structures. Optionally, a user may select several building forms and/or core structures, optionally generated by the program, from which to proceed to generate a space plan 110 and/or a design pool 112 and/or provide a cost-benefit evaluation 114.

Optionally, surrounding and/or local architecture may be incorporated in evaluating user preferences and/or design constraints. For example, a user may input locations of surrounding buildings and/or parking, and/or utilities, and/or public transportation and/or local weather conditions (such as, high snowfall, high temperatures, monsoons, etc.), and/or earthquake protection, etc. Optionally, some embodiments may incorporate data from mapping programs. Optionally, some embodiments may incorporate data from images of the surrounding area. For example, the program may analyze the appearance of surrounding architecture and, optionally, may incorporate it into the building plan.

In some embodiments, building design constraints may include, for example, plot dimensions and/or other plot details. For example, details about the ground quality, and/or soil analysis, and/or what can be built into it (e.g., basement) and/or what and/or where can be built onto it. The building restrictions may include statutory details (such as, building laws and/or restrictions and/or preferences). Optionally, a user may be able to select a country and/or town and/or city in which construction is planned, and the program may provide the preferences and restrictions of the selected location. Optionally, there may be updates that may be downloaded by the user that include new locations and/or updated local laws.

An embodiment may incorporate various tenant and/or user preferences. Optionally, user preferences may include desired space needs and/or uses and/or dimensions and/or design features and/or amenities, etc.

In some embodiments, program may test possible building layouts by generating various building assignments for potential tenant preferences which are either generated (for example, randomly and/or based on external data [for example, data of tenants of nearby buildings]) and/or sampled from a database. For example, such an embodiment may be used when the building is in a conceptual stage, before specific tenant preferences are available and/or when there is limited data on potential tenants. Optionally, a user may be able to select preferred user requirements.

In some embodiments, the program may generate various options for each input. For example, a user may be able to input a weight for the importance of each factor. For example, the weighting may be by a number system such that a factor that is crucial may be weighted as number 10 and/or something unimportant may be weighted as 1.

According to some embodiments, building constraints may include heights of building, and/or floors, and/or rooms, and/or may include floor geometry and/or utility features (e.g., water, and/or electricity, and/or gas, and/or heating and/or cooling preferences), parking, strength preferences (e.g., earthquake resistance), foundation preferences.

An embodiment may include pre-programmed constraints for various types of uses of the building. For example, there may be a setting to design an apartment building and/or an office building and/or a store and/or a supermarket and/or other. Optionally a user may be able to download additional standard types of buildings and/or building usage parameters and/or constraints and/or a program may output building constraints based on user plans and/or inputs. Optionally, a user may input parts of the building that have certain predetermined constraints and/or usages and/or other parts of the building which may have other predetermined constraints. For example, one floor may have a certain use and/or another floor may have another use.

According to some embodiments, tenant preferences may include various settings for building appearance and/or aesthetics. Optionally tenant constraints may include various settings for building materials and/or details. For example, types of windows and/or doors and/or wall and/or building materials, etc. Optionally, such data may be upgraded as technology, and/or building methods, and/or building materials and/or tenant preferences, and/or building statutes evolve.

An embodiment may include user input on various optional and/or essential additions to the building. For example, a user may input as a building constraint, and/or preference, an elevator, and/or a swimming pool, and/or garage, and/or parking lot, and/or an atrium, and/or solar panels, etc.

According to some embodiments, once tenant constraints and/or preferences and/or building restrictions are input and/or selected, the program may generate various building forms and/or core structure, and/or floor plans. Optionally, the program may generate multiple building core and/or frame and/or floor plans. According to some embodiments, the program will then analyze and/or evaluate the potential costs and/or profits for each building plan, and/or part thereof. Optionally, a user may select how many optional building plans are shown. According to some embodiments, the program may then present and/or report to the user the building plans according to pre-selected preferences, e.g., plans with potential profit margins above a preselected threshold value, etc. Optionally, the program may report to the user various advantages and/or disadvantages of each building plan. Optionally, the program may report to the user long-term profit predictions and/or short-term profit predictions. Optionally, the program may facilitate analysis of the various advantages and/or disadvantages of each section of each building plan. Optionally, the program may facilitate analysis of the long-term profit predictions and/or short-term profit predictions of each section of each building plan. Optionally, such analysis may facilitate evaluation of each section of the building plan, as well as the overall building plan.

According to some embodiments, the program may be used by a user to renovate a preexisting building, and/or floor, and/or part of a building.

According to some embodiments, the program may be connected to a database of contractors. Optionally, the database may include a user rating system. Optionally, a contractor database may assist the user to assess costs. Optionally, a contractor database may assist the user to select a contractor who specializes in and/or has a good review for the desired building requirements. Optionally, a contractor database may include an availability timetable of the contractors, e.g., to assist the user in selecting a contractor for work to be performed by a deadline.

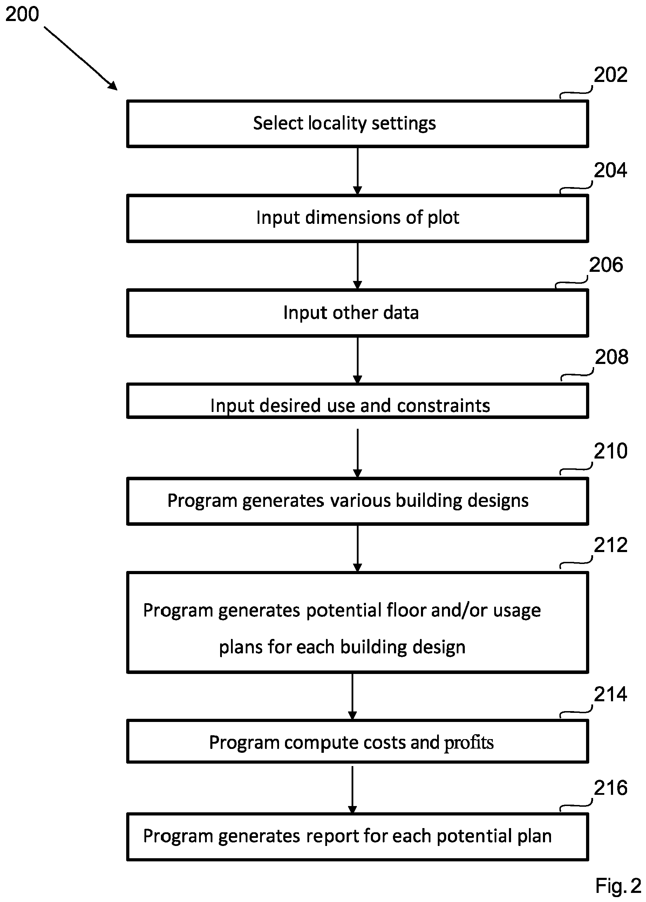

Fig. 2 is a flow chart illustrating a method of optimizing profitability of a building according to an embodiment of the invention. For example, in method 200, the algorithm may include an input interface that requests a user to gather information, and/or accesses the information automatically (for example from on-line sources and/or databases. Information which may be input and/or accessed may include locality settings 202, such as local ordinances, map navigation data relating to traffic, public transportation, local services, and/or location of building resources, geographical databases (for example for information about bedrock depth and strength, groundwater depth at various times of year etc.), climate databases (for example to compute costs of lighting, heating, cooling, expected wind speeds, drainage needs), commercial databases (for example to compute the cost of materials, power, construction etc.). The dimensions 204 of the plot may be input. Optionally additional local information 206 may be collected (either from the user, automatically, or elsewise). For example, architectural issues (for example the surrounding architecture and matching issues), surroundings (are there tall buildings around, what is the potential value of the view, what effect will the architecture have on wind, sun exposure etc.), access limitations that may have an effect on building cost, etc. Optionally, limitations and/or plans for use of the space 208 may be input (are there already committed tenants? Selected uses (such as, apartments, offices, supermarket, etc.)). The algorithm optionally generates multiple building designs 210 (for example, designs for the shell and/or core of the building). The algorithm optionally generates floor plans and/or usage plans 212. The algorithm optionally computes 214 the estimated cost and profit of the various designed building spaces. Optionally, the results are organized and presented to the user (e.g., in a report) 216 to select the preferred combination of long and/or short term costs and/or profits and/or risks.

In some embodiments, the data may be used for constraints on the problem and/or variable bounds and/or to develop an objective function. Optionally, the alternative design choices and/or report details may be guided, for example using optimization routines (for example, linear programming, non-linear programming, stochastic programming, dynamic programming, combinatorial optimization, infinite-dimensional optimalization, hill climbing, simulated annealing, genetic algorithms, ant colony optimization) and/or Artificial intelligence (for example, cybernetic approaches symbolic approaches cognitive simulation, logic-based methods, knowledge based, pattern recognition, neural networks, integrated methods, deep learning etc.).

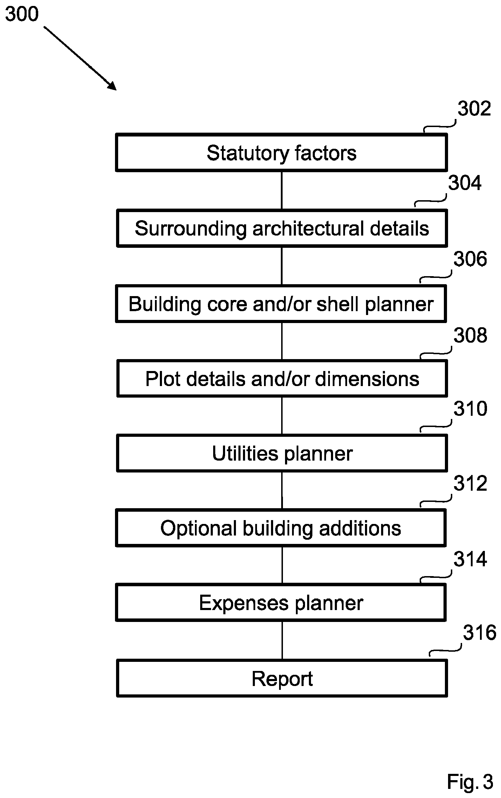

Fig. 3 is a block diagram illustrating various aspects of an embodiment of the invention. The system may include an input interface. Optionally, the interface may facilitate manual and/or automatic data input. In some cases, data may be input in accordance with preset forms and/or formats. Additionally, or alternatively, free input may be supplied. Optionally the system may include modules that develop multiple plans for various options. In some embodiments, various reports may be generated graphically and/or symbolically and/or verbally summarizing the results for each of the possible designs and/or parts thereof and/or for the entire project.

For example, system 300 may include one or more modules for input of standardized data. Optionally, the data may be input manually and/or accessed automatically by the system from one or more databases. Optionally, the data may be entered into and/or selected from a series of menus. Data may include statutory constraints 302, surrounding architectural details 304, weather conditions, transportation, utilities, geographical data, commercial data, building materials, logistical issues, etc. Optionally, system 300 may include one or more data input modules (e.g., 302, 304), building core and/or shell planner module 306, a plot details and/or dimension module 308, a utilities planner module 310 (e.g., plumbing, electricity, gas, internet, etc.), optional modules 312 (e.g., for amenities, specialized usage, etc.), an expenses planner module 314, and/or a reporting module 316.

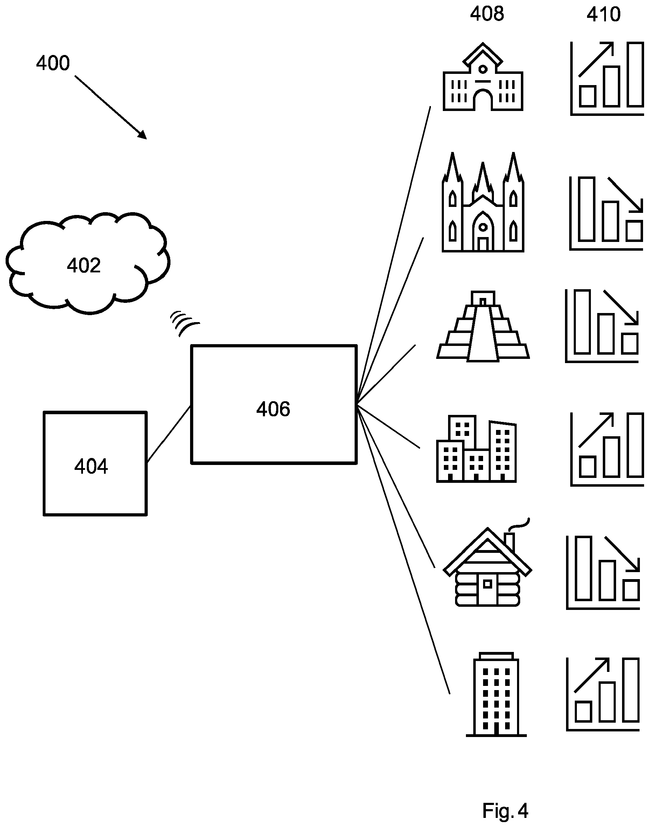

Fig. 4 is a schematic illustration of the system in accordance with some embodiments. For example, in system 400, data may be input manually 404 and/or accessed from various online and/or local databases 402 to an system 406. Optionally, the algorithm may include one or more modules, for example as disclosed herein. System 406 may output multiple possible building designs 408, each with its own cost benefit evaluation 410, and/or a comparison of the various building designs and their cost benefit evaluations.

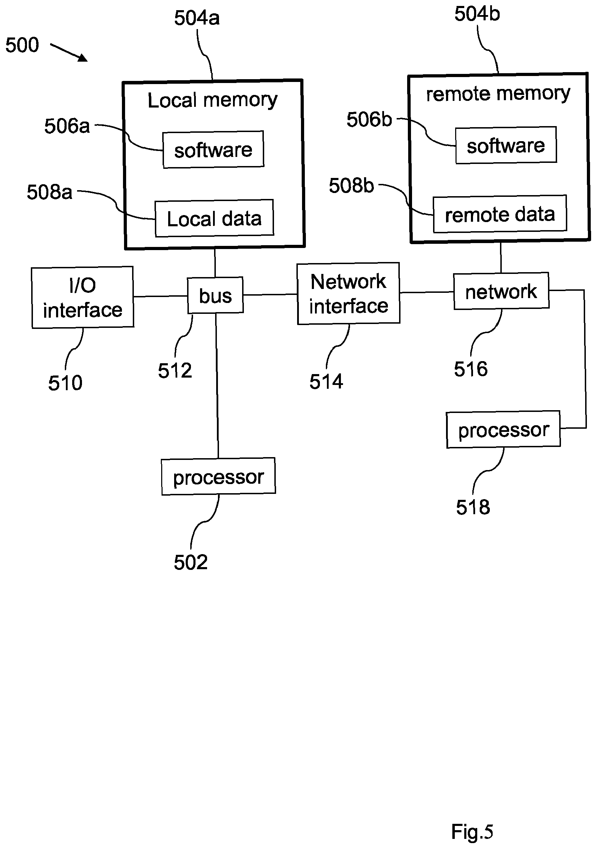

Fig. 5 is a block diagram illustrating a system for designing a building in accordance with an embodiment 500 of the current invention. In some embodiments, a processor 502 is connected via data bus 512 to a local memory 504a. For example, the local memory may store software 506a and/or data 508a. Alternatively or additionally, the data bus 512 may connect the processor to a network interface 514 that may connect to a network 516 and/or network resources, for example, network memory 504b and/or a network processor 518. For example, the local memory may store software 506a and/or data 508a. Optionally, the system may make use of a remote processor 518.

In some embodiments, software 506a and/or software 506b may include design software for designing building parts for example, there may be a module for designing key components of the building. For example, there may be a module to design the main structure of the building. The main structure optionally encompasses the foundation and/or footings, which, for example, distribute the weight of the building across the ground. Additionally or alternatively, the main structure may include a core. The core optionally contains shared services like elevators, staircases, and utility shafts. Optionally, the core may provide structural stability and/or accommodate vertical transportation within the building. Additionally or alternatively, the main structure may include a framework of the building. For example, the framework may include columns, (e.g., providing vertical support) and/or beams and/or girders (e.g., forming the horizontal network, supporting floors and transferring loads to the columns). Additionally or alternatively, the main structure may include a shear wall and/or diagonal bracing, (for example, to resist horizontal forces such as wind or seismic activity). Additionally or alternatively, the main structure may include the main structure of the building may incorporate mechanical, electrical, and plumbing systems integrated within the structure to support the building's functionality.

In some embodiments, software 506a and/or software 506b may include design software for designing aesthetic aspects of the building. For example, aesthetic aspects may include a building's shell. Optionally the shell includes exterior walls, facades, and cladding materials. These elements not only shield the structure from the elements but also contribute to its aesthetics.

In some embodiments, software 506a and/or software 506b may include design software for designing reconfigurable aspects of a building. For example, the module may design a floor plan. For example, the module may define purposes for rooms, or accommodating additional functionalities. The floor plan may include allowance for future reconfiguration. Optionally, the module may design electrical connections. The module may also include contingencies for adjustments to support technological advancements or changes in power distribution needs, with the integration of new outlets, lighting fixtures, or upgraded wiring. Optionally, the module may design plumbing. In some embodiments, plumbing systems might be design to allow reconfiguration to increase water efficiency, and/or accommodate additional fixtures, and/or address issues related to drainage. Optionally, the construction is designed for adaptive reuse, where existing structures are repurposed for different functions, for example, leading to alterations in ventilation, partitioning, and/or utility layouts. Optionally, the module include advanced building technologies and/or modular construction techniques, for example to further facilitate reconfigurations, offering opportunities to enhance energy efficiency, technological integration, and/or overall building performance.

In some embodiments, software 506a and/or software 506b may include optimization software and/or cost accounting software and/or statistical software and/or artificial intelligence routines and/or financial software to e.g., determine the preferences of the designer and/or the cost benefit of various designs under various contingency scenarios and/or the likelihood that a structure will conform to constraints of the design. Additionally or alternatively, the software 506a and/or 506b may include specialized engineering modules such as three dimensional design software (e.g., to output 3D models and/or specifications for ordering parts and/or equipment). Optionally, the system will include management software (for example, for planning and assisting with management of the building and/or predicting costs). Optionally, the system will include planning and organizing software (for example, for planning construction and/or organizing constructions). Optionally, the system will include imaging software. Optionally, the system will include software (e.g., searching software, automatic updating routines and/or artificial intelligence software) for accessing information.

In some embodiments, the local memory 504a and/or the remote memory 504b may include data 508a, 508b. For example, data 508a, 508b may include building constraints and/or preferences. For example, constraints may include local constraints such as external aesthetic constraints and/or building codes and/or laws. For example, preferences may include preferred use and/or requirements for use and/or alternatives uses and/or cost of adaptation and/or market predictions.

In some embodiments, the system will include an input and output (I/O) interface 510. For example, the interface may include human input/output devices such as key boards, view screens, touch screens, data connections etc. Additionally or alternatively, the I/O interface may include specialized engineering modules. For example, the system may connected to manufactures of building parts and/or suppliers of construction materials (e.g., to order parts and/or materials according to a building plan). For example, the system may connect to 3D printers to build 3D models. For example, the system may connect imagining systems to make presentations and images of the planned construction.

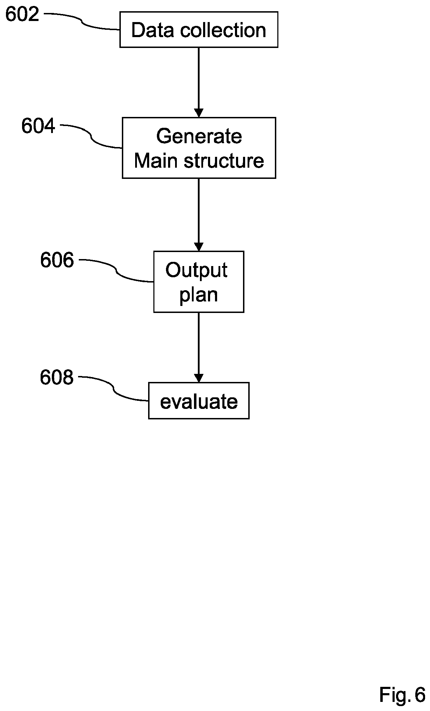

Fig. 6 is a flow chart illustration of a computer assisted method of designing building in accordance with an embodiment of the current invention.

In some embodiments, a computerized system will collect 602 and/or store data for use designing the building for example, to determine constraints on the building and/or evaluate 608 whether the building is compliant with the constraints. For example, the system may collect 602 data from the user as to the intended use of the building and/or particular design preferences (for example, a designer may add constraints on the shape of the building e.g., that it should include an acute angle and/or particular features e.g., there should be a arched support visible etc.). For example, the user may specify that the building may be used for residential, industrial or commercial purposes. Alternatively or additionally, the system may consider various use scenarios and compart the costs and/or benefits of each possible use. Use may affect anticipated load-bearing requirements, local building codes, and environmental conditions. In some embodiments, the purpose of the building, whether residential, commercial, or industrial, significantly influences the design decisions regarding the size and layout of the main support elements. Anticipated loads, both static and dynamic, including the weight of the structure itself, occupant loads, furniture, and equipment, are crucial considerations.

In some embodiments, building constraints may relate to specific spatial needs and layout requirements implicit in different uses. The constraints may influence the floor plans, room sizes, and overall building footprint. Loads imposed by the intended use, whether heavy machinery in factories or large crowds in event spaces, may constrain the structural design and material choices. Accessibility and circulation may constrain designs to enable efficient movement for users, including provisions for disability access, optimized traffic flow, and well-planned emergency evacuation routes. Preferred lighting and/or acoustics, may be associated with intended use. Intended use may create constraints relating to environmental regulations and sustainability standards. Budget and construction timeline may be influenced by the intended use, impacting resource allocation, material selection, and/or construction methods, and or creating constraints on the speed of the project.

Buildings intended for commercial use may include constraints shaped by their specific functions. For example, office buildings, may be designed for open workspaces and/or potential conference centers. These buildings may be constrained to include flexible floor plans and/or robust technological infrastructure. For example, shopping malls, housing retail stores, restaurants, and/or entertainment venues, may be constrained for high accessibility, ample open space, and/or integrated amenities. For example, convention centers designed for large-scale events, may be constrained to include flexible and adaptable spaces and/or convenient infrastructure for conferences and trade shows. For example, hotels, providing temporary lodging, may include constraints related to room configurations, communal areas for dining and/or gathering, and/or provision of adequate parking facilities. For example, residential buildings, such as apartment complexes, senior living facilities, and/or student housing, may be constrained to link efficient space utilization, diverse unit types, and considerations for communal amenities, accessibility, and security. For example, public and institutional structures like hospitals, schools, universities, museums, and transportation hubs may include constraints, including specialized functionality, hygiene and safety protocols, flexible spaces, controlled environments, efficient circulation, diverse services, and/or security measures.

On some embodiments, the system may collect data on building codes and regulations, for example, the minimum standards and safety requirements, influencing decisions on material selection, construction methods, and overall structural design. Regulatory requirements and compliance with building codes shape decisions on space allocation, ensuring safety, accessibility, and adherence to legal standards.

In some embodiments, the system gathers environmental information. For example, information may be downloaded from a network about wind distribution and/or the loads that it may cause on the building. The information may be checked by human and/or automatic routines. Optionally, data on geology including soil and/or rock characteristics, seismic activity and/or groundwater are also downloaded from the network. Optionally, the system will evaluation the data. Optionally, the system may analyze where improved data would potentially improve cost or benefits. For example, where data is too sparce and/or uncertainty is high exploratory measurements may be ordered and/or further data may be sought. For example, drilling and/or sampling may be performed. For example, the data may be used to plan foundation and/or waterproofing and/or drainage. Plumbing, wiring, ventilation constraints may affect locations of walls rise and floors.

In some embodiments, data may be collected for other factors like the potential for future expansions, technological advancements. For example, this data may be used to evaluation sustainability constraints that impact the design decisions. For example, design may account for flexibility and adaptability in the main support structure. In essence, a comprehensive understanding of these constraints facilitates that the design decisions align with the more specific constraints (e.g., safety standards, and long-term functionality of the large building's main support structure). Technological preferences, such as the integration of IT infrastructure and communication systems, may impact various aspects of planning.

In some embodiments, the system may collect information on expected costs and prices. For example, of building materials, labor, transportation, fuel, building staffing, over time. Cost, the ever-present reality, joins the ensemble. Budget constraints like material choice and construction time influence how space is used. Creative space use may be promoted to encourage every square foot serves a purpose while remaining within financial limitations.

In some embodiments, the system will use the collected information and generate 604 multiple options of possible designs for the main support of the building.

In some embodiment, the design for the main structure will include one or more options for the building core. Various types of building cores may be generated 604 and/or evaluated 608. For example, one or more designs for a concrete core may be generated 604. Optionally, a concrete core may utilize reinforced concrete for constructing core walls, columns, and/or floors. Concrete cores may be preferred when the building constraints include fire resistance, soundproofing, and/or structural stability. For example, concrete cores may be included in designs for high-rise buildings, hospitals, and structures with high occupancy. Optionally, one or more steel cores will be generated, for example, steel cores may be preferred when there are significant constraints on weight, cost and speed of construction. For example, steel cores may include steel beams and columns. For example, steel core designs may be supplied for buildings with expansive open spaces and flexible layouts like office buildings or shopping malls, steel cores, though efficient, may have lower fire resistance, necessitating additional soundproofing measures. Alternatively or additionally, hybrid cores may combining elements of both concrete and steel, for example strike a balance between cost, speed, and performance. This type of core may be preferred in mid-rise buildings where a blend of structural strength and flexibility is desired. In some embodiments, the core may utilize other materials (e.g., fiber-reinforced polymers (FRPs)). This approach offers several advantages, including a high strength-to-weight ratio, corrosion resistance, and improved seismic performance. However, the technology is still relatively new and may incur higher upfront costs. In some embodiments, for example, when there are significant constraints that favor steel and/or hybrid and/or concrete cores, designs of one or more of each relevant type of core may be generated 604 and/or evaluated 608. Some embodiments, may include a centralized core and/or a decentralized core and/or multiple cores.

In some embodiments, the system will generate 604 one or more plans for essential building services such as plumbing, electrical, and ventilation systems. For example, these services may be integrated into the main core or located separately, providing flexibility based on the building's design and space constraints.

In some embodiments a system may generate 604 multiple options for the shape of a building. For example, designs may be rectangular and/or include obtuse and/or acute angles and/or curves. For example, the building may be shaped to aesthetic reasons and/or better use of space and/or reducing cost and/or other factors. Optionally, multiple options of building shape with be generated 604 and/or evaluated 608.

In some embodiments, for example design for a building foundation and/or core, the system will generate 604 one or more designs for structural elements such as beams, columns, slabs, bracing systems, arches and/or shells.

In some embodiments, the system includes design options for horizontal structural elements. Optionally, horizontal elements may distribute loads and/or support vertical elements such as columns and walls. For example, the horizontal elements may include beams, arches, trusses, and/or shells. A design constraint for horizontal elements may include their ability to resist bending forces. The size, shape, and material of the element may be chosen to facilitate withstanding the anticipated loads without excessive deflection or failure. Additionally, the span length, support conditions, and load distribution may influence design. For example, beams may include various cross-sectional shapes, (e.g., I-shaped, or others).

Various optional geometries of beams may be included in a design. For example, I-beams may enhance stiffness and/or improves the beam's ability to resist buckling. I-beams find extensive use in various structural applications, particularly where higher load-carrying capacity and enhanced stability are essential. W-shaped beams represent another evolution in support elements, offering characteristics similar to I-beams but with wider flanges. This design modification provides even greater bending strength and load-carrying capacity, making W-beams suitable for heavy-duty applications. Bridges and long-span roofs, which demand robust support systems, often incorporate W-beams to facilitate structural reliability under substantial loads. Optionally, box beams may include a hollow rectangular section, these beams may offer improved torsional rigidity and the ability to resist bending in multiple directions. This makes them particularly suitable for architectural applications where both functionality and visual appeal are crucial. Circular beams may provide bending and shear resistance in all directions. For example, they may be suitable for situations where structural loads are distributed in a multidirectional manner. Circular beams may occasionally employed for decorative purposes. In some embodiments, T-shaped beams offer efficiency in one-way bending, making them well-suited for applications like floor joists and other horizontal members. With a flange on one side of the web, T-beams provide structural support while optimizing material usage.

In some embodiments, the system will include one or more design options for vertical elements. For example, columns are vertical structural elements that may provide support to horizontal elements and/or transfer loads to the building foundation. In some embodiments, a column is constrained to resist axial loads and, in some cases, lateral loads such as those from wind or seismic forces. Design options may include the height, cross-sectional dimensions, and material properties (e.g., the properties may be selected to prevent buckling and/or facilitate stability). Aesthetic considerations may play a role in column design, as they contribute to the overall visual appeal of the building.

In some embodiments a design and/or multiple designs will include various geometries for vertical elements. For example, square columns, characterized by simplicity and efficiency in supporting compression loads, may be used. In some embodiments a design may include rectangular columns. For example, the column may be adapted with different side lengths for load requirements that vary between directions, for example, in cases where there are unbalanced lateral loads. Circular columns, are resistance to lateral loads, for example wind, become integral in buildings with large open spaces and/or for aesthetic considerations. Non-circular columns may be preferred by the column is to be attached to straight elements. Composite sections may be designed by joining two smaller elements, elevate structural performance by offering greater bending and torsional stiffness, e.g., for scenarios where columns must withstand both axial and lateral loads. In some embodiments, the composite columns may be formed of concrete-encased steel columns. Such columns may combine the strength of steel with the fire resistance and ductility of concrete.

In some embodiments, a plan may include one or more options for core type in for example, depending on strategic constraints based on construction requirements, design flexibility, speed, and/or material preferences. For example, a core may include cast-in-place concrete. For example, the cast in place concrete may be poured directly on-site, offer monolithic strength and flexibility for intricate architectural variations. The cast in place core may be contraindicated when the is a strict constraint on construction times. In some embodiments, a precast concrete core may be planned. For example, the precast core may utilize pre-fabricated panels assembled on-site, plans that prioritize faster construction but with limited design flexibility precast cores may be preferred. In some embodiments, a plan may include a steel frame core. For example, the steel frame core may employ steel beams and columns, providing both strength and design versatility, with infill walls made of various materials for aesthetic considerations. Alternatively or additionally, building plans may include an option for a mixed or hybrid core. For example, the core may have concrete walls with steel framing.

In some embodiments, the system will include one or more design options for two-dimensional structural elements. For example, two dimensional elements may include planar slabs. Optionally, a slab may form a floor and/or a ceiling of a building. Design constraints for slabs include their ability to support dead loads (permanent loads like the structure's weight) and live loads (variable loads like occupants and furniture). The thickness of the slab, reinforcement detailing, and material selection are aspects of slab design that may be generated 604 and/or output by the system. The system may supply one or more options for slabs including different types of slabs, (e.g., flat slabs, waffle slabs, or ribbed slabs).

In some embodiments, the system will include one or more design options for a foundation. For example, the foundation may transfer building loads to the ground. Design constraints for foundations may include ensuring stability against settlement, preventing differential settlement, and resisting uplift forces. The type of foundation, whether shallow (such as spread footings) or deep (such as piles or caissons), may depend on constraints such as soil conditions and building loads, safety factors, building loading etc.

In some embodiments, the system will include one or more design options for a bracing system. For example, a bracing system may include elements designed to provide lateral stability to a building, especially against forces like wind or earthquakes. Constraints for bracing systems involve the locations for braces to resist lateral loads effectively. The design constraints include both the strength and stiffness of the bracing elements. The functional requirements of the bracing system may be balanced with its impact on the building's aesthetics, as visible bracing elements can influence the overall design and interior space planning.

For each main structure generated 604 the system may output 606 one or more plans for the building (e.g., for plans, architectural and/or esthetic aspects of the building, construction plans, management plans, plans for rental and/or selling of space).

Optionally, the system may evaluate 608 each plan. For example, evaluation 608 may include predicted revenue, risk and/or other costs and benefits of each plan. The evaluation 608 may be presented to a designer for final approval and/or further refinement.

These embodiments are provided by way of example and are in no means intended to be limiting the scope of the invention.

While the invention has been described in its preferred form or embodiment with some degree of particularity, it is understood that this description has been given only by way of example and that numerous changes in the details of construction, fabrication, and use, including the combination and arrangement of parts, may be made without departing from the spirit and scope of the invention.

### GENERAL

It is expected that during the life of a patent maturing from this application many relevant building technologies, artificial intelligence methodologies, computer user interfaces, image capture devices will be developed and the scope of the terms for design elements, analysis routines, user devices is intended to include all such new technologies *a priori.*

Unless otherwise defined, all technical and/or scientific terms used herein have the same meaning as commonly understood by one of ordinary skill in the art to which the invention pertains. Although methods and materials similar or equivalent to those described herein can be used in the practice or testing of embodiments of the invention, exemplary methods and/or materials are described below. In case of conflict, the patent specification, including definitions, will control. In addition, the materials, methods, and examples are illustrative only and are not intended to be necessarily limiting.

As will be appreciated by one skilled in the art, some embodiments of the present invention may be embodied as a system, method or computer program product. Accordingly, some embodiments of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, some embodiments of the present invention may take the form of a computer program product embodied in one or more computer readable medium(s) having computer readable program code embodied thereon. Implementation of the method and/or system of some embodiments of the invention can involve performing and/or completing selected tasks manually, automatically, or a combination thereof. Moreover, according to actual instrumentation and equipment of some embodiments of the method and/or system of the invention, several selected tasks could be implemented by hardware, by software or by firmware and/or by a combination thereof, e.g., using an operating system.

For example, hardware for performing selected tasks according to some embodiments of the invention could be implemented as a chip or a circuit. As software, selected tasks according to some embodiments of the invention could be implemented as a plurality of software instructions being executed by a computer using any suitable operating system. In an exemplary embodiment of the invention, one or more tasks according to some exemplary embodiments of method and/or system as described herein are performed by a data processor, such as a computing platform for executing a plurality of instructions. Optionally, the data processor includes a volatile memory for storing instructions and/or data and/or a non-volatile storage, for example, a magnetic hard-disk and/or removable media, for storing instructions and/or data. Optionally, a network connection is provided as well. A display and/or a user input device such as a keyboard or mouse are optionally provided as well.

Any combination of one or more computer readable medium(s) may be utilized for some embodiments of the invention. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium and/or data used thereby may be transmitted using any appropriate medium, including but not limited to wireless, wireline, optical fiber cable, RF, etc., or any suitable combination of the foregoing.

Computer program code for carrying out operations for some embodiments of the present invention may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Some embodiments of the present invention may be described below with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may additionally be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may additionally be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Data and/or program code may be accessed and/or shared over a network, for example the Internet. For example, data may be shared and/or accessed using a social network. A processor may include remote processing capabilities for example available over a network (e.g., the Internet). For example, resources may be accessed via cloud computing. The term "cloud computing" refers to the use of computational resources that are available remotely over a public network, such as the internet, and that may be provided for example at a low cost and/or on an hourly basis. Any virtual or physical computer that is in electronic communication with such a public network could potentially be available as a computational resource. To provide computational resources via the cloud network on a secure basis, computers that access the cloud network may employ standard security encryption protocols such as SSL and PGP, which are well known in the industry.

Some of the methods described herein are generally designed only for use by a computer, and may not be feasible or practical for performing purely manually, by a human expert. A human expert who wanted to manually perform similar tasks might be expected to use completely different methods, e.g., making use of expert knowledge and/or the pattern recognition capabilities of the human brain, which would be vastly more efficient than manually going through the steps of the methods described herein.

As used herein the term "about" refers to ± 10%

The terms "comprises", "comprising", "includes", "including", "having" and their conjugates mean "including but not limited to".

The term "consisting of" means "including and limited to".

The term "consisting essentially of" means that the composition, method or structure may include additional ingredients, steps and/or parts, but only if the additional ingredients, steps and/or parts do not materially alter the basic and novel characteristics of the claimed composition, method or structure.

As used herein, the singular form "a", "an" and "the" include plural references unless the context clearly dictates otherwise.

Throughout this application, various embodiments of this invention may be presented in a range format. It should be understood that the description in range format is merely for convenience and brevity and should not be construed as an inflexible limitation on the scope of the invention. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

It is appreciated that certain features of the invention, which are, for clarity, described in the context of separate embodiments, may additionally be provided in combination in a single embodiment. Conversely, various features of the invention, which are, for brevity, described in the context of a single embodiment, may additionally be provided separately or in any suitable sub-combination or as suitable in any other described embodiment of the invention. Certain features described in the context of various embodiments are not to be considered essential features of those embodiments, unless the embodiment is inoperative without those elements.

Although the invention has been described in conjunction with specific embodiments thereof, it is evident that many alternatives, modifications and variations will be apparent to those skilled in the art. Accordingly, it is intended to embrace all such alternatives, modifications and variations that fall within the spirit and broad scope of the appended claims.

All publications, patents and patent applications mentioned in this specification are herein incorporated in their entirety by reference into the specification, to the same extent as if each individual publication, patent or patent application was specifically and individually indicated to be incorporated herein by reference. In addition, citation or identification of any reference in this application shall not be construed as an admission that such reference is available as prior art to the present invention. To the extent that section headings are used, they should not be construed as necessarily limiting.

## Claims

1. A method for building planning comprising:
inputting data on intended use and building constraints;
generating multiple options for a main structure compliant to the building constraints; and
outputting multiple building designs for each of said multiple options for a main structure each of said multiple building designs fitting for said intended use.

2. The method of claim 1, wherein said generating includes generating multiple options for a building core.

3. The method of claim 1, wherein said generating includes generating at least one of multiple options of a framework of the building and multiple options for a substructure of a building.

4. The method of claim 1, wherein each of said multiple building designs includes a floor plan.

5. The method of claim 1, wherein each of said multiple building designs includes an anticipated rent revenue.

6. The method of claim 1, wherein each of said multiple options for a main structure includes at least one of a core type, a core construction method, a structural geometry and a geometry of a structural element.

7. The method of claim 1, further comprising: outputting a cost benefit evaluation for example of at least one of said multiple building designs.

8. The method of claim 1, wherein the building design includes at least one long term cost including at least one of management costs, upkeep costs and cost of renovation.

9. The method of claim 1, wherein the building constraints include at least one commercial data selected from a cost of materials, a cost of power, a cost of construction and a cost of manpower.

10. An architectural computing system comprising:
a database including
data on building constraints and
data on profitability of building management; and
a processor programmed for
generating multiple building core options and
for each said building core option generating multiple building plans
incorporating multiple building constraints to provide a cost benefit analysis for each of said multiple building plans.

11. The system of claim 10, wherein at least one of said building constraints is sourced from online database.

12. The system of claim 10, wherein said processor is further configured for outputting an anticipated floor use.

13. The system of claim 10, wherein said processor is further configured for outputting an anticipated rent revenue.

14. The system of claim 10, wherein said processor is further configured for outputting a structural design including at least one of a core type, a core construction method, a structural geometry and a geometry of a structural element.

15. The system of claim 10, where said core options includes at least two of, a central core, a cast on site core, a prefabricated core, a service core, a decentralized core and a steel frame core.
